# EUROPÄISCHE PATENTSCHRIFT

(11) **EP 4 070 642 B1**
(45) Veröffentlichungstag und Bekanntmachung des Hinweises auf die Patenterteilung: **28.02.2024**
(21) Anmeldenummer: 21167466.8
(22) Anmeldetag: 08.04.2021
(51) Int. Cl.: A01D 45/02

(54) **VORSATZGERÄT ZUM ERNTEN STÄNGELARTIGER PFLANZEN MIT EINEM QUER ZUR FAHRTRICHTUNG LIEGENDEN PFLÜCKSPALT**
ATTACHMENT FOR HARVESTING STALK-LIKE PLANTS WITH A PICKING GAP TRANSVERSE TO THE DIRECTION OF TRAVEL
APPAREIL ACCESSOIRE POUR RÉCOLTER DES PLANTES SUR TIGE DOTÉ D'UNE FENTE DE CUEILLETTE SITUÉE TRANSVERSALEMENT AU SENS DE DÉPLACEMENT

(43) Veröffentlichungstag der Anmeldung: 12.10.2022
(73) Patentinhaber: Maschinenfabrik Kemper GmbH & Co. KG, 48703 Stadtlohn (DE)
(72) Erfinder: Weitenberg, Hubert, 68163 Mannheim (DE)
(74) Vertreter: Holst, Sönke

(56) Entgegenhaltungen:
- DE-A1- 10 026 495
- DE-A1-102005 021 792
- DE-A1-102009 051 053
- DE-A1-102011 051 792
- DE-A1-102019 007 585

## Beschreibung

Die Erfindung betrifft ein Vorsatzgerät zum Ernten stängelartiger Pflanzen mit einem quer zur Fahrtrichtung liegenden Pflückspalt gemäß dem Oberbegriff des Anspruchs 1.

### Stand der Technik

Aus dem Stand der Technik ist eine Vielzahl von Vorsatzgeräten mit Pflückeinrichtungen bekannt, welche dem Ernten von Pflanzen mit Fruchtständen (z.B. Mais) dienen.

Zur Ernte derartiger Pflanzen wird eine selbstfahrende oder gezogene Erntemaschine über ein abzuerntendes Feld bewegt, dessen Erntevorsatz (Pflücker) die auf dem Feld stehenden Pflanzen, ggf. nach Abtrennen der oberen Pflanzenteile von einem im Boden verbleibenden Stumpf, annimmt und die Stängel mit Frucht mit Hilfe von Einzugsorganen und/oder durch die Vorwärtsbewegung des Erntevorsatzes zur Pflückeinrichtung transportiert. Bei der Pflückvorrichtung handelt es sich üblicherweise um einen zwischen zwei Pflückplatten gebildeten Pflückspalt, dessen Spaltbreite auf die Größe des Stängels einstellbar ist. Durch den Pflückspalt kann zwar der Stängel, nicht jedoch die Frucht gezogen werden, sodass die Frucht beim Durchziehen von der Pflanze getrennt wird. Das Durchziehen übernehmen gegenläufig rotierende Pflückwalzen, die unterhalb des Pflückspalts angeordnet sind und den Stängel zwischen sich nach unten einziehen. Die Früchte werden nach dem Pflücken durch die Einzugsorgane und/oder Querfördermittel des Erntevorsatzes aus dem Bereich des Pflückspalts abtransportiert und in der Erntemaschine (bei der es sich in der Regel um einen Mähdrescher oder Feldhäcksler handelt) weiterverarbeitet und die Stängel durch Messer der Pflückwalzen oder einen stromab davon angeordneten Stängelhäcklser zerkleinert und auf dem abzuerntenden Feld belassen oder separat eingesammelt oder verarbeitet. Da die zu erntenden Pflanzen in Reihen gepflanzt werden, fahren gebräuchliche Erntemaschinen entlang dieser Reihen über das Feld und ihre jeweils einer Pflanzenreihe zugeordneten Pflückeinheiten können entlang der Breite der Erntevorsatzes verstellt und somit auf unterschiedliche Abstände der Reihen eingestellt werden.

Üblicherweise erstrecken sich der Pflückspalt und die Pflückwalzen in Vorwärtsrichtung und als Einzugsorgane dienen oberhalb des Pflückspalts angeordnete Kettenförderer (US 3 462 928 A) oder um die Hochachse rotierende Förderer (US 7 905 079 B2). Da sich der Pflückspalt in Vorwärtsrichtung erstreckt, bauen derartige Pflücker relativ lang und verlegen den Schwerpunkt der Kombination aus Erntevorsatz und Erntemaschine relativ weit nach vorn.

Eine andere Art von Pflücker ist ähnlich einem Schneidwerk für die Getreideernte aufgebaut, d.h. er umfasst einen Messerbalken zum Abschneiden der Pflanzen und eine Haspel, um sie nach hinten zu fördern, während der Pflückspalt durch hintereinander angeordnete Paare aus sich über die Breite des Pflückers erstreckenden, gegensinnig rotierenden Stangen gebildet wird, welche die Pflanzenstängel nach unten einziehen, die Kolben aber davon abtrennen und sie über eine Querförderschnecke dem Schrägförderer des Mähdreschers zuführen (US 3 333 405 A). Diese Anordnung hat sich in der Praxis jedoch nicht durchgesetzt, wahrscheinlich wegen Problemen bei der Annahme der Pflanzenstängel durch die Pflückwalzen und bei der Übergabe der Kolben an die Querförderschnecke.

Im Stand der Technik finden sich auch Ansätze, den Pflückspalt quer zur Vorwärtsrichtung des Pflückers anzubringen. Hierzu sei beispielsweise auf die US 3 350 863 A, EP 0 134 832 A1, DE 197 34 747 A1, DE 100 26 495 A1, DE 10 2005 021 792 A1, DE 10 2009 051 053 A1, DE 10 2011 051 792 A1 und DE 10 2013 106 197 A verwiesen. Die Reiheneinheiten der Pflücker umfassen jeweils einen reihenabhängig oder reihenunabhängig arbeitenden, angetriebenen Förderer, der die Pflanzenstängel erfasst und dem Pflückspalt zuführt, in dem sie nach unten eingezogen werden. Die Pflanzenstängel sind dazu um 90° umzulenken, um sie in den quer orientierten Pflückspalt einzuführen.

Ein Nachteil der bisherigen Pflücker, egal ob mit in Vorwärtsrichtung oder quer zur Vorwärtsrichtung angeordneten Pflückspalten, macht sich insbesondere bei der Ernte von verwehtem Erntegut (Lagermais) bemerkbar, da das Annehmen von nicht senkrecht stehenden Pflanzenstängeln durch den Förderer und die Übergabe an den Pflückspalt sowie das Erfassen und Einziehen der Pflanzenstängel durch die Pflückwalzen problematisch ist. Zudem sind in jeder Reiheneinheit endliche Pflückspalte vorgesehen. Unter ungünstigen Bedingungen erreicht somit eine Pflanze das Ende des Pflückspalts, bevor sie ganz nach unten eingezogen wurde. Da weiterhin Pflanzen nachlaufen, können sich am Ende des Pflückspalts Gutstaus und Verstopfungen ergeben. All dies führt zu einer Behinderung des Gutflusses und ggf. auch zum Verlust von Erntegut.

### Aufgabe

Die vorliegende Erfindung hat sich zum Ziel gesetzt, ein Vorsatzgerät in Form eines Pflückers bereitzustellen, bei dem die oben erwähnten Nachteile vermieden werden oder zumindest in verminderter Form auftreten.

### Lösung

Die Lösung der Aufgabe erfolgt erfindungsgemäß durch die Merkmale des unabhängigen Anspruches. Vorteilhafte Ausgestaltungen der Erfindung sind in den abhängigen Ansprüchen angegeben.

Ein Vorsatzgerät zum Ernten stängelartiger Pflanzen ist mit einer Anzahl seitlich nebeneinander angeordneter Förderzusammenbauten zur Abschneiden und Abfördern von Pflanzen und einer stromab der Förderzusammenbauten angeordneten, sich quer zur Fahrtrichtung über die gesamte Arbeitsbreite zumindest einer Hälfte des Vorsatzgeräts erstreckenden Pflückeinrichtung versehen, die einen Pflückspalt und darunter angeordnete Pflückwalzen umfasst, um Fruchtstände von den Pflanzen zu trennen und einer gesonderten Verwertung zuzuführen. Das Vorsatzgerät ist demnach mit einem quer zur Fahrtrichtung liegenden, durch eine Hälfte des Vorsatzgeräts oder das ganze Vorsatzgerät durchgehenden Pflückspalt ausgestattet, sodass der Einzug des Ernteguts nicht dadurch behindert wird, dass er durch ein Pflückspaltende unterbrochen ist, an dem sich die Pflanzen stauen können. Unter dem Pflückspalt sind zwei rotierende, gegenläufige und quer zur Fahrtrichtung liegende, durch das ganze Vorsatzgerät gehende Pflückwalzen angeordnet, die ebenfalls aufgrund ihrer Durchgängigkeit dazu beitragen, dass die Pflanzen sicher eingezogen werden.

Im Ergebnis werden eine sichere Abförderung der Pflanzen aus dem frontseitigen Erntebereich, der mit reihenabhängig oder reihenunabhängig arbeitenden Förderzusammenbauten ausgestattet ist, und eine zuverlässige Übergabe der Pflanzenstängel an die nachgeordneten Pflückeinrichtungen sowie eine kontinuierliche Gutförderung auch bei sich überkreuzenden Stängeln sichergestellt.

Die Förderzusammenbauten können jeweils einen Einzugsförderer und einen (optionalen) Zwischenförderer umfassen, wobei der um die Hochachse rotierende Einzugsförderer zum Abschneiden der Pflanzen und zum Fördern der abgeschnittenen Pflanzen in einen bogenförmigen Förderkanal konfiguriert ist und der ggf. dem Einzugsförderer nachgeordnete, um die Hochachse rotierende Zwischenförderer konfiguriert ist, die Pflanzen entlang des Förderkanals zu fördern und an die Pflückeinrichtung zu übergeben. Auf den Zwischenförderer kann eventuell auch ganz verzichtet werden. Er ermöglicht jedoch, bei gegebenem Reihenabstand der zu erntenden Pflanzen und somit begrenztem Durchmesser des Einzugsförderers, durch einen seitlichen Versatz seiner Drehachse gegenüber der Drehachse des Einzugsförderers, eine weitere Bewegung des unteren Endes der Pflanze nach außen als es nur durch den Einzugsförderer möglich wäre. Die besagte Bewegung führt zu einer Neigung des oberen Teils der Pflanze nach innen, zur Mitte des Vorsatzgeräts hin (oder bei einer anderen Ausführungsform, die in den Figuren nicht gezeigt ist, nach außen), was deren Einzug durch die Pflückeinrichtung vereinfacht.

Der Einzugsförderer kann eine untere Einzugsscheibe und eine obere Einzugsscheibe aufweisen, wobei die untere Einzugsscheibe mit nach außen weisenden, vorlaufend gekrümmten Fingern ausgestattet ist, die die Pflanzen im Zusammenwirken mit einer feststehenden, unterhalb der unteren Einzugsscheibe angeordneten Gegenschneide abschneidet, und die obere, koaxial zur unteren Einzugsscheibe angeordnete Einzugsscheibe mit Zähnen versehen ist, die den Förderkanal überstreichen. Die Finger der unteren Einzugsscheibe können am nachlaufenden Rand mit nach oben stehenden Stegen versehen sein.

Rückwärtig des Zwischenförderers kann eine Fingerwalze angeordnet sein, die um eine sich quer zur Fahrtrichtung erstreckende Drehachse antreibbar und mit einem exzentrisch zur Drehachse angeordneten Finger versehen ist, der den Endbereich des Förderkanals zumindest teilweise überstreicht. Um die Übergabesicherheit noch weiter zu erhöhen, ist somit hinter den ersten beiden Einzugselementen ein achsparallel zu den Pflückwalzen eingebauter dritter Mitnehmer in Form der Fingerwalze angeordnet. Der Förderkanal kann in seinem Endbereich so geformt sein, dass der Endbereich sich rechtwinklig zum Pflückspalt erstreckt oder einen spitzen oder stumpfen Winkel mit dem Pflückspalt einschließt. Der dritte Mitnehmer überstreift den Endbereich des Förderkanals und übergibt den Stängel unmittelbar an die Pflückwalzen, ohne ihn loszulassen, bevor er eingezogen wird. Der Stängel wird somit während der Einführung zwischen die Pflückwalzen zwischen wenigstens einer der Pflückwalzen und der Fingerwalze eingeklemmt. Die Fingerwalze kann mit überstehenden Stegen ausgestattet sein, um das Einziehen des Pflanzenstängels zu verbessern.

Die Drehgeschwindigkeiten und Anzahlen der jeweils zum Fördern der Pflanzen dienenden Elemente des Einzugsförderers, des Zwischenförderers und der Fingerwalze können derart bemessen und synchronisiert sein, dass die Pflanzen über die gesamte Länge des Förderkanals mit konstanter Geschwindigkeit gefördert werden und der Finger der Fingerwalze genau dann mit einer Pflanze zusammenwirkt, wenn diese durch den Zwischenförderer in den dem Pflückspalt benachbarten Endbereich des Förderkanals gelangt und die Pflanze nach unten zieht, um sie zwischen die Pflückwalzen einzuführen. Somit sind der Einzugsförderer, der Zwischenförderer und die Fingerwalze synchron abgestimmt, sodass eine unproblematische Übergabe zwischen den drei Förder-Elementen sichergestellt ist.

Der Pflückspalt kann zwischen einem rückwärtigen Ende eines oberhalb des Förderzusammenbaus angeordneten Abdeckbleches und dem Anfang einer Querförderschneckenwanne des Querförderers gebildet sein, wobei Windungen der Querförderschnecke oberhalb des Pflückspalt angeordnet sind. Indem man die Position der Querförderschneckenwanne in Fahrtrichtung verstellt, kann der Pflückspalt in seiner Größe verstellbar sein. Die in den Raum oberhalb des Pflückspalts hineinragende Querfördererschnecke ermöglicht, dass der Stängel am Hüllkreis der Querförderschnecke des Querförderer vorbei nach unten eingezogen werden kann, während das abgekantete Abdeckblech für die Querförderschnecke ein Widerlager bildet, sodass die Früchte (z.B. Maiskolben) abtransportiert werden können.

In einer vorteilhaften Ausgestaltung der Erfindung kann das Vorsatzgerät, das aus einer Vielzahl von nebeneinander angeordneten Förderzusammenbauten und der Pflückeinrichtung aufgebaut ist, aus einer Erntekonfiguration in eine kompakte Transportkonfiguration gefaltet werden, wobei es insbesondere ein Mittelteil und zwei Seitenteile enthält, die auf das Mittelteil gefaltet werden können, wobei die Pflückwalzen an den Faltungen beim Falten getrennt (entkuppelt) werden können und sowohl am Mittelteil als auch an den Seitenteilen abgestützt werden. Bei einem einteiligen, nicht einklappbarem Vorsatzgerät könnten die Pflückwalzen sich jeweils einteilig über die gesamte Breite erstrecken und nur an den Seitenwänden drehbar gelagert sein, obwohl auch bei einer derartigen Ausführungsform Zwischenlagerungen der Pflückwalzen zwischen den Seitenwänden denkbar wären.

Eine nach oben stehende Rückwand des Vorsatzgeräts kann so ausgestaltet sein, dass sie zum Transport nach vorn und unten geklappt werden kann und im eingeklappten Zustand einen Schutz für Teilerspitzen ermöglicht. Die Rückwand kann derart hoch dimensioniert sein, dass die Pflanzen bei der Ernte nicht nach hinten über das Vorsatzgerät hinüberfallen können. Die Rückwand kann in Flucht mit dem Pflückspalt stehen, so dass die eingezogenen Pflanzen nicht

### Beschreibung für den Vertragsstaat DE

Die Erfindung betrifft ein Vorsatzgerät zum Ernten stängelartiger Pflanzen mit einem quer zur Fahrtrichtung liegenden Pflückspalt gemäß dem Oberbegriff des Anspruchs 1.

### Stand der Technik

Aus dem Stand der Technik ist eine Vielzahl von Vorsatzgeräten mit Pflückeinrichtungen bekannt, welche dem Ernten von Pflanzen mit Fruchtständen (z.B. Mais) dienen.

Zur Ernte derartiger Pflanzen wird eine selbstfahrende oder gezogene Erntemaschine über ein abzuerntendes Feld bewegt, dessen Erntevorsatz (Pflücker) die auf dem Feld stehenden Pflanzen, ggf. nach Abtrennen der oberen Pflanzenteile von einem im Boden verbleibenden Stumpf, annimmt und die Stängel mit Frucht mit Hilfe von Einzugsorganen und/oder durch die Vorwärtsbewegung des Erntevorsatzes zur Pflückeinrichtung transportiert. Bei der Pflückvorrichtung handelt es sich üblicherweise um einen zwischen zwei Pflückplatten gebildeten Pflückspalt, dessen Spaltbreite auf die Größe des Stängels einstellbar ist. Durch den Pflückspalt kann zwar der Stängel, nicht jedoch die Frucht gezogen werden, sodass die Frucht beim Durchziehen von der Pflanze getrennt wird. Das Durchziehen übernehmen gegenläufig rotierende Pflückwalzen, die unterhalb des Pflückspalts angeordnet sind und den Stängel zwischen sich nach unten einziehen. Die Früchte werden nach dem Pflücken durch die Einzugsorgane und/oder Querfördermittel des Erntevorsatzes aus dem Bereich des Pflückspalts abtransportiert und in der Erntemaschine (bei der es sich in der Regel um einen Mähdrescher oder Feldhäcksler handelt) weiterverarbeitet und die Stängel durch Messer der Pflückwalzen oder einen stromab davon angeordneten Stängelhäcklser zerkleinert und auf dem abzuerntenden Feld belassen oder separat eingesammelt oder verarbeitet. Da die zu erntenden Pflanzen in Reihen gepflanzt werden, fahren gebräuchliche Erntemaschinen entlang dieser Reihen über das Feld und ihre jeweils einer Pflanzenreihe zugeordneten Pflückeinheiten können entlang der Breite der Erntevorsatzes verstellt und somit auf unterschiedliche Abstände der Reihen eingestellt werden.

Üblicherweise erstrecken sich der Pflückspalt und die Pflückwalzen in Vorwärtsrichtung und als Einzugsorgane dienen oberhalb des Pflückspalts angeordnete Kettenförderer (US 3 462 928 A) oder um die Hochachse rotierende Förderer (US 7 905 079 B2). Da sich der Pflückspalt in Vorwärtsrichtung erstreckt, bauen derartige Pflücker relativ lang und verlegen den Schwerpunkt der Kombination aus Erntevorsatz und Erntemaschine relativ weit nach vorn.

Eine andere Art von Pflücker ist ähnlich einem Schneidwerk für die Getreideernte aufgebaut, d.h. er umfasst einen Messerbalken zum Abschneiden der Pflanzen und eine Haspel, um sie nach hinten zu fördern, während der Pflückspalt durch hintereinander angeordnete Paare aus sich über die Breite des Pflückers erstreckenden, gegensinnig rotierenden Stangen gebildet wird, welche die Pflanzenstängel nach unten einziehen, die Kolben aber davon abtrennen und sie über eine Querförderschnecke dem Schrägförderer des Mähdreschers zuführen (US 3 333 405 A). Diese Anordnung hat sich in der Praxis jedoch nicht durchgesetzt, wahrscheinlich wegen Problemen bei der Annahme der Pflanzenstängel durch die Pflückwalzen und bei der Übergabe der Kolben an die Querförderschnecke.

Im Stand der Technik finden sich auch Ansätze, den Pflückspalt quer zur Vorwärtsrichtung des Pflückers anzubringen. Hierzu sei beispielsweise auf die US 3 350 863 A, EP 0 134 832 A1, DE 197 34 747 A1, DE 100 26 495 A1, DE 10 2005 021 792 A1, DE 10 2009 051 053 A1, DE 10 2011 051 792 A1 und DE 10 2013 106 197 A verwiesen. Die Reiheneinheiten der Pflücker umfassen jeweils einen reihenabhängig oder reihenunabhängig arbeitenden, angetriebenen Förderer, der die Pflanzenstängel erfasst und dem Pflückspalt zuführt, in dem sie nach unten eingezogen werden. Die Pflanzenstängel sind dazu um 90° umzulenken, um sie in den quer orientierten Pflückspalt einzuführen.

Ein Nachteil der bisherigen Pflücker, egal ob mit in Vorwärtsrichtung oder quer zur Vorwärtsrichtung angeordneten Pflückspalten, macht sich insbesondere bei der Ernte von verwehtem Erntegut (Lagermais) bemerkbar, da das Annehmen von nicht senkrecht stehenden Pflanzenstängeln durch den Förderer und die Übergabe an den Pflückspalt sowie das Erfassen und Einziehen der Pflanzenstängel durch die Pflückwalzen problematisch ist. Zudem sind in jeder Reiheneinheit endliche Pflückspalte vorgesehen. Unter ungünstigen Bedingungen erreicht somit eine Pflanze das Ende des Pflückspalts, bevor sie ganz nach unten eingezogen wurde. Da weiterhin Pflanzen nachlaufen, können sich am Ende des Pflückspalts Gutstaus und Verstopfungen ergeben. All dies führt zu einer Behinderung des Gutflusses und ggf. auch zum Verlust von Erntegut.

Für den Vertragsstaat DE liegt eine ältere, nicht vorveröffentlichte Anmeldung (DE 10 2019 007 585 A1 vor), in der ein Vorsatzgerät gattungsgemäßer Art beschrieben wird, bei dem die Pflanzen durch ein Fingerelement in einen sich über die Arbeitsbreite erstreckenden Pflückspalt eingezogen werden.

### Aufgabe

Die vorliegende Erfindung hat sich zum Ziel gesetzt, ein Vorsatzgerät in Form eines Pflückers bereitzustellen, bei dem die oben erwähnten Nachteile vermieden werden oder zumindest in verminderter Form auftreten.

### Lösung

Die Lösung der Aufgabe erfolgt erfindungsgemäß durch die Merkmale des unabhängigen Anspruches. Vorteilhafte Ausgestaltungen der Erfindung sind in den abhängigen Ansprüchen angegeben.

Ein Vorsatzgerät zum Ernten stängelartiger Pflanzen ist mit einer Anzahl seitlich nebeneinander angeordneter Förderzusammenbauten zur Abschneiden und Abfördern von Pflanzen und einer stromab der Förderzusammenbauten angeordneten, sich quer zur Fahrtrichtung über die gesamte Arbeitsbreite zumindest einer Hälfte des Vorsatzgeräts erstreckenden Pflückeinrichtung versehen, die einen Pflückspalt und darunter angeordnete Pflückwalzen umfasst, um Fruchtstände von den Pflanzen zu trennen und einer gesonderten Verwertung zuzuführen. Das Vorsatzgerät ist demnach mit einem quer zur Fahrtrichtung liegenden, durch eine Hälfte des Vorsatzgeräts oder das ganze Vorsatzgerät durchgehenden Pflückspalt ausgestattet, sodass der Einzug des Ernteguts nicht dadurch behindert wird, dass er durch ein Pflückspaltende unterbrochen ist, an dem sich die Pflanzen stauen können. Unter dem Pflückspalt sind zwei rotierende, gegenläufige und quer zur Fahrtrichtung liegende, durch das ganze Vorsatzgerät gehende Pflückwalzen angeordnet, die ebenfalls aufgrund ihrer Durchgängigkeit dazu beitragen, dass die Pflanzen sicher eingezogen werden.

Im Ergebnis werden eine sichere Abförderung der Pflanzen aus dem frontseitigen Erntebereich, der mit reihenabhängig oder reihenunabhängig arbeitenden Förderzusammenbauten ausgestattet ist, und eine zuverlässige Übergabe der Pflanzenstängel an die nachgeordneten Pflückeinrichtungen sowie eine kontinuierliche Gutförderung auch bei sich überkreuzenden Stängeln sichergestellt.

Die Förderzusammenbauten umfassen jeweils einen Einzugsförderer und einen Zwischenförderer, wobei der um die Hochachse rotierende Einzugsförderer zum Abschneiden der Pflanzen und zum Fördern der abgeschnittenen Pflanzen in einen bogenförmigen Förderkanal konfiguriert ist und der dem Einzugsförderer nachgeordnete, um die Hochachse rotierende Zwischenförderer konfiguriert ist, die Pflanzen entlang des Förderkanals zu fördern und an die Pflückeinrichtung zu übergeben. Der Zwischenförderer ermöglicht, bei gegebenem Reihenabstand der zu erntenden Pflanzen und somit begrenztem Durchmesser des Einzugsförderers, durch einen seitlichen Versatz seiner Drehachse gegenüber der Drehachse des Einzugsförderers, eine weitere Bewegung des unteren Endes der Pflanze nach außen als es nur durch den Einzugsförderer möglich wäre. Die besagte Bewegung führt zu einer Neigung des oberen Teils der Pflanze nach innen, zur Mitte des Vorsatzgeräts hin (oder bei einer anderen Ausführungsform, die in den Figuren nicht gezeigt ist, nach außen), was deren Einzug durch die Pflückeinrichtung vereinfacht.

Der Einzugsförderer kann eine untere Einzugsscheibe und eine obere Einzugsscheibe aufweisen, wobei die untere Einzugsscheibe mit nach außen weisenden, vorlaufend gekrümmten Fingern ausgestattet ist, die die Pflanzen im Zusammenwirken mit einer feststehenden, unterhalb der unteren Einzugsscheibe angeordneten Gegenschneide abschneidet, und die obere, koaxial zur unteren Einzugsscheibe angeordnete Einzugsscheibe mit Zähnen versehen ist, die den Förderkanal überstreichen. Die Finger der unteren Einzugsscheibe können am nachlaufenden Rand mit nach oben stehenden Stegen versehen sein.

Rückwärtig des Zwischenförderers ist eine Fingerwalze angeordnet, die um eine sich quer zur Fahrtrichtung erstreckende Drehachse antreibbar und mit einem exzentrisch zur Drehachse angeordneten Finger versehen ist, der den Endbereich des Förderkanals zumindest teilweise überstreicht. Um die Übergabesicherheit noch weiter zu erhöhen, ist somit hinter den ersten beiden Einzugselementen ein achsparallel zu den Pflückwalzen eingebauter dritter Mitnehmer in Form der Fingerwalze angeordnet. Der Förderkanal kann in seinem Endbereich so geformt sein, dass der Endbereich sich rechtwinklig zum Pflückspalt erstreckt oder einen spitzen oder stumpfen Winkel mit dem Pflückspalt einschließt. Der dritte Mitnehmer überstreift den Endbereich des Förderkanals und übergibt den Stängel unmittelbar an die Pflückwalzen, ohne ihn loszulassen, bevor er eingezogen wird. Der Stängel wird somit während der Einführung zwischen die Pflückwalzen zwischen wenigstens einer der Pflückwalzen und der Fingerwalze eingeklemmt. Die Fingerwalze kann mit überstehenden Stegen ausgestattet sein, um das Einziehen des Pflanzenstängels zu verbessern.

Die Drehgeschwindigkeiten und Anzahlen der jeweils zum Fördern der Pflanzen dienenden Elemente des Einzugsförderers, des Zwischenförderers und der Fingerwalze sind derart bemessen und synchronisiert, dass die Pflanzen über die gesamte Länge des Förderkanals mit konstanter Geschwindigkeit gefördert werden und der Finger der Fingerwalze genau dann mit einer Pflanze zusammenwirkt, wenn diese durch den Zwischenförderer in den dem Pflückspalt benachbarten Endbereich des Förderkanals gelangt und die Pflanze nach unten zieht, um sie zwischen die Pflückwalzen einzuführen. Somit sind der Einzugsförderer, der Zwischenförderer und die Fingerwalze synchron abgestimmt, sodass eine unproblematische Übergabe zwischen den drei Förder-Elementen sichergestellt ist.

Der Pflückspalt kann zwischen einem rückwärtigen Ende eines oberhalb des Förderzusammenbaus angeordneten Abdeckbleches und dem Anfang einer Querförderschneckenwanne des Querförderers gebildet sein, wobei Windungen der Querförderschnecke oberhalb des Pflückspalt angeordnet sind. Indem man die Position der Querförderschneckenwanne in Fahrtrichtung verstellt, kann der Pflückspalt in seiner Größe verstellbar sein. Die in den Raum oberhalb des Pflückspalts hineinragende Querfördererschnecke ermöglicht, dass der Stängel am Hüllkreis der Querförderschnecke des Querförderer vorbei nach unten eingezogen werden kann, während das abgekantete Abdeckblech für die Querförderschnecke ein Widerlager bildet, sodass die Früchte (z.B. Maiskolben) abtransportiert werden können.

In einer vorteilhaften Ausgestaltung der Erfindung kann das Vorsatzgerät, das aus einer Vielzahl von nebeneinander angeordneten Förderzusammenbauten und der Pflückeinrichtung aufgebaut ist, aus einer Erntekonfiguration in eine kompakte Transportkonfiguration gefaltet werden, wobei es insbesondere ein Mittelteil und zwei Seitenteile enthält, die auf das Mittelteil gefaltet werden können, wobei die Pflückwalzen an den Faltungen beim Falten getrennt (entkuppelt) werden können und sowohl am Mittelteil als auch an den Seitenteilen abgestützt werden. Bei einem einteiligen, nicht einklappbarem Vorsatzgerät könnten die Pflückwalzen sich jeweils einteilig über die gesamte Breite erstrecken und nur an den Seitenwänden drehbar gelagert sein, obwohl auch bei einer derartigen Ausführungsform Zwischenlagerungen der Pflückwalzen zwischen den Seitenwänden denkbar wären.

Eine nach oben stehende Rückwand des Vorsatzgeräts kann so ausgestaltet sein, dass sie zum Transport nach vorn und unten geklappt werden kann und im eingeklappten Zustand einen Schutz für Teilerspitzen ermöglicht. Die Rückwand kann derart hoch dimensioniert sein, dass die Pflanzen bei der Ernte nicht nach hinten über das Vorsatzgerät hinüberfallen können. Die Rückwand kann in Flucht mit dem Pflückspalt stehen, so dass die eingezogenen Pflanzen nicht nach hinten umfallen können. Im Falle eines klappbaren Vorsatzgeräts kann die Rückwand aus einem Mittelteil und zwei Seitenteilen bestehen.

Oberhalb der Förderzusammenbauten können dachförmige Abdeckhauben angeordnet werden, die zusammen mit einer Querförderschneckenwanne eine sich quer erstreckende Mulde bilden. Auch können benachbarte Abdeckhauben oberhalb der Förderkanäle trichterförmige Vertiefungen bilden.

Unterhalb der Pflückwalzen kann ein Stängelhäcksler und darunter ein Trennblech angeordnet sein, unter welchem ein Stoppelmulcher angeordnet ist, sodass in einem nachfolgenden Arbeitsgang mit demselben Vorsatzgerät in einer weiteren vorteilhaften Ausgestaltung auch die Stängel zerkleinert und auf dem Feld verteilt werden können. Denkbar wäre auch, die zerkleinerten Stängel abzutransportieren, um sie zu sammeln und einer getrennten Verwertung zuzuführen (s. DE 196 01 421 C2). In einer weiteren vorteilhaften Ausgestaltung der Erfindung kann der Stängelhäcksler mit einem Winkel nach hinten ansteigend ausgebildet sein, sodass ein annähernd paralleles Trennblech angeordnet werden kann, um geschnittenes Material auf diesem abzufördern, das zudem einen Freiraum für den Stoppelmulcher bildet.

### Ausführungsbeispiel

Nachfolgend wird die Erfindung unter Bezugnahme auf die anliegenden Zeichnungen anhand bevorzugter Ausführungsformen näher erläutert.

Es zeigen
- Fig. 1: eine perspektivische Ansicht eines als Pflücker ausgeführten Vorsatzgeräts zur Ernte stängelartiger Pflanzen,
- Fig. 2: eine Ansicht auf einen Abschnitt des Vorsatzgeräts mit teilweise abgenommenen Abdeckblechen und Abdeckhauben von oben,
- Fig. 3: eine Ansicht entsprechend der Figur 2 mit angebrachten Abdeckhauben,
- Fig. 4: eine Ansicht auf einen Abschnitt des Vorsatzgeräts von unten,
- Fig. 5: einen vertikalen Schnitt durch das Vorsatzgerät,
- Fig. 6: einen vertikalen Schnitt durch ein mit einem Stängelzerkleinerer ausgestattetes Vorsatzgerät,
- Fig. 7: einen vergrößerten Ausschnitt der Figur 5,
- Fig. 8: einen vergrößerten Ausschnitt aus der Figur 3,und
- Fig. 9: eine perspektivische Ansicht einer Fingerwalze.

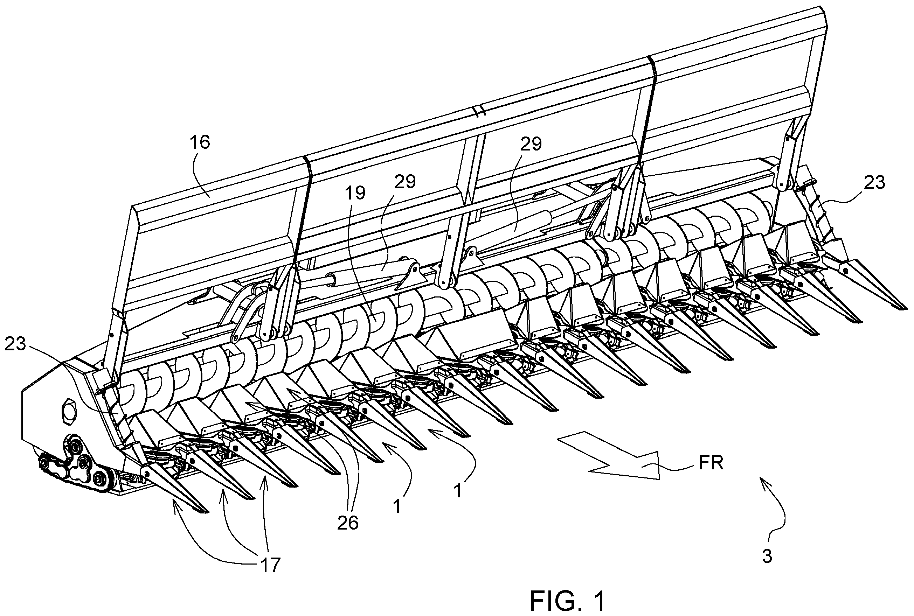

Fig. 1 zeigt eine schematische Darstellung eines als Pflücker für stängelartiges Erntegut, wie Mais, ausgeführten Vorsatzgeräts 3, welches in seinem rückwärtigen Bereich an einen nicht dargestellten Mähdrescher oder Feldhäckslers angeschlossen werden kann. Das Vorsatzgerät 3 umfasst einen tragenden Rahmen, an dem eine Anzahl an angetriebenen Förderzusammenbauten zum Annehmen und Abfördern von auf dem Feld stehenden Pflanzen befestigt ist, zwischen denen jeweils eine Teilerspitze 17 angeordnet ist. Der Rahmen trägt auch eine Querförderschnecke 19, welche die durch eine rückwärtig der Förderer angeordneten Pflückeinrichtung von den Pflanzen abgetrennten Früchte (Kolben) zur Mitte des Vorsatzgerätes 3 verbringt. Dort werden die Früchte durch eine Öffnung in der Rückwand des Vorsatzgeräts 3 an einen Schräg- oder Einzugsförderer der das Vorsatzgerät 3 tragenden und im Erntebetrieb in eine Fahrtrichtung FR über ein Feld bewegenden, selbstfahrenden Erntemaschine in Form eines Mähdreschers oder Feldhäckslers (nicht gezeigt) übergeben.

Das Vorsatzgerät 3 umfasst eine linke und eine rechte Hälfte, die zu seiner vertikalen Längsmittelebene symmetrisch ausgeführt sind. Das Vorsatzgerät kann in an sich bekannter Weise (vgl. EP 1 021 944 A1) durch Aktoren 29 in eine kompakte Transportposition gefaltet werden, in der Seitenteile nach oben über den Mittelteil gefaltet werden, nachdem eine Rückwand 16 aktorisch oder von Hand nach unten in eine Stellung verbracht wurde, in der sie die Teilerspitzen 17 schützend überdeckt.

An den Oberseiten der Seitenwände des Vorsatzgeräts sind Stängelheberschnecken 23 angebracht.

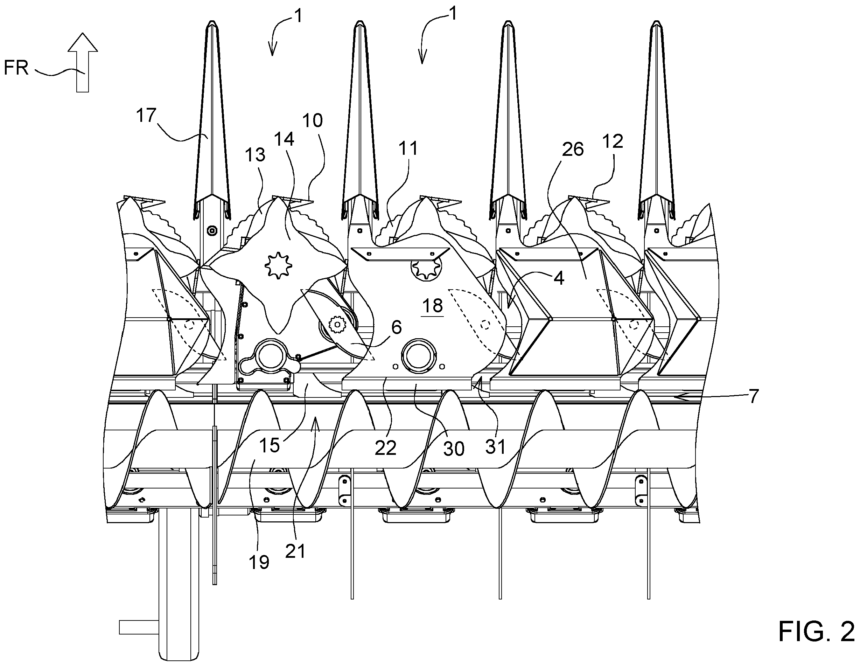

Fig. 2 zeigt eine von oben betrachtete Detailansicht des Vorsatzgeräts 3, teilweise ohne Abdeckhaube 26 und ohne Abdeckblech 18 in der Draufsicht, um einen Blick auf die darunter liegenden Bauteile zu ermöglichen. Im Erntebereich 1 teilen die Teilerspitzen 17 die sich in diesem Bereich befindlichen Pflanzen zunächst in unterschiedliche, seitlich nebeneinander angeordnete Erntebereiche auf, da sich die Erntemaschine in Fahrtrichtung FR bewegt.

Im Erntebereich 1 erfasst sodann ein Einzugsförderer 5 die Stängel und führt sie in einen nach außen gekrümmten, bogenförmigen Förderkanal 4, der durch oberhalb der Einzugsförderer 5 und des Zwischenförderers 6 angeordnete Abdeckbleche 18 zur Seite hin begrenzt wird.

Der Einzugsförderer 5 umfasst eine untere Einzugsscheibe 13 (vgl. die Figuren 2 bis 5) und eine obere Einzugsscheibe 14. Die untere Einzugsscheibe 13 schneidet die Pflanzen von dem im Boden verbleibenden Stumpf ab. Hierzu ist die untere Einzugsscheibe 13 mit nach außen weisenden, vorlaufend gekrümmten Fingern 10 ausgestattet, die die Pflanzen im Zusammenwirken mit einer feststehenden, unterhalb der unteren Einzugsscheibe 13 angeordneten Gegenschneide 11 abschneidet. Eine Schneide kann an der vorlaufenden Kante der Finger 10 und/oder an der Gegenschneide 11 ausgebildet sein (mögliche Ausführungsformen hierzu finden sich in DE 10 2007 038 274 B3 und DE 10 2007 038 276 B3). Es wäre jedoch auch denkbar, die Gegenschneide 11 mit Schneidkanten zu versehen und sie in Drehung zu versetzen und die untere Einzugsscheibe 13 nur als Förderer zu gestalten.

Die Finger 10 halten gemeinsam mit der sich um dieselbe (etwa vertikale) Drehachse rotierend angeordneten oberen Einzugsscheibe 14 den Stängel fest, der außerdem von einem an der nachlaufenden Kante der Finger 10 nach oben ragenden Steg 12 auf der unteren Einzugsscheibe 13 gehalten wird, und in Richtung des Förderkanals 4 und durch den Förderkanal 4 in der Weise hindurch gefördert wird, dass äußere Zähne der oberen Einzugsscheiben 14 den Förderkanal 4 überstreichen. Die vorlaufenden Enden der Finger 10 laufen den zugehörigen Zähnen der oberen Einzugsscheibe 14 jeweils geringfügig vor, was es erlaubt, zwischen den Teilerspitzen 17 keine weiteren Mittel zum Einweisen der Stängel in den Einzugsförderer 5 vorzusehen, wie Teilerführungen und daran angebrachte Einweiserfinger, da die Pflanzen zuerst unten durch die Finger 10 und erst anschließend durch die Zähne der oberen Einzugsscheibe 14 erfasst werden. Die nachlaufenden Enden der Stege 12 befinden sich etwa dort, wo die Finger 10 von einem vorlaufenden, etwa tangential verlaufenden Bereich in einen nach innen gerichteten Bereich übergehen. Durch die gerade verlaufenden Stege 12 wird das Herausnehmen der Stängel aus dem Einzugförderer 5 durch den Zwischenförderer 6 vereinfacht, ohne dass der Stängel in größerem Maße geknickt oder gebogen würde.

Stromab und rückwärtig des Einzugsförderers 5 ist ein Zwischenförderer 6 angeordnet, dessen Drehachse parallel zu jener des Einzugsförderers 5 orientiert ist. Der Zwischenförderer 6, der sich synchron zu den und in der Drehrichtung der Einzugsscheiben 13 und 14 des Einzugsförderers 5 in der Drehrichtung des Einzugsförderers 5 dreht, übernimmt im Förderkanal 4 die Pflanzenstängel vom Einzugsförderer 5 und transportiert sie in Richtung eines sich quer zur Fahrtrichtung FR und über die gesamte Arbeitsbreite des Vorsatzgeräts 3 erstreckenden Pflückspalts 7 weiter, indem seine beiden oberen Flügel und seine beiden unteren Flügel den Förderkanal 4 überstreichen. Die Drehachse des Zwischenförderers 6 ist gegenüber der Drehachse des Einzugsförderers 5 nach außen hin versetzt. Die Drehrichtungen von Zwischenförderer 6 und Einzugsförderer 5 sind gleich, obwohl auch denkbar wäre, sie unterschiedlich zu wählen.

Der Pflückspalt 7 wird durch das Ende einer nach unten abgekanteten, rückwärtigen Fläche 22 des Abdeckblechs 18 und den Anfang der Querschneckenwanne 21 des Querförderers 20 gebildet. Die Querförderschnecke 19 des Querförderers 20 erstreckt sich so weit nach vorn sodass ihre Windungen sich auch vertikal oberhalb des Pflückspalts 7 befinden, nicht aber davor.

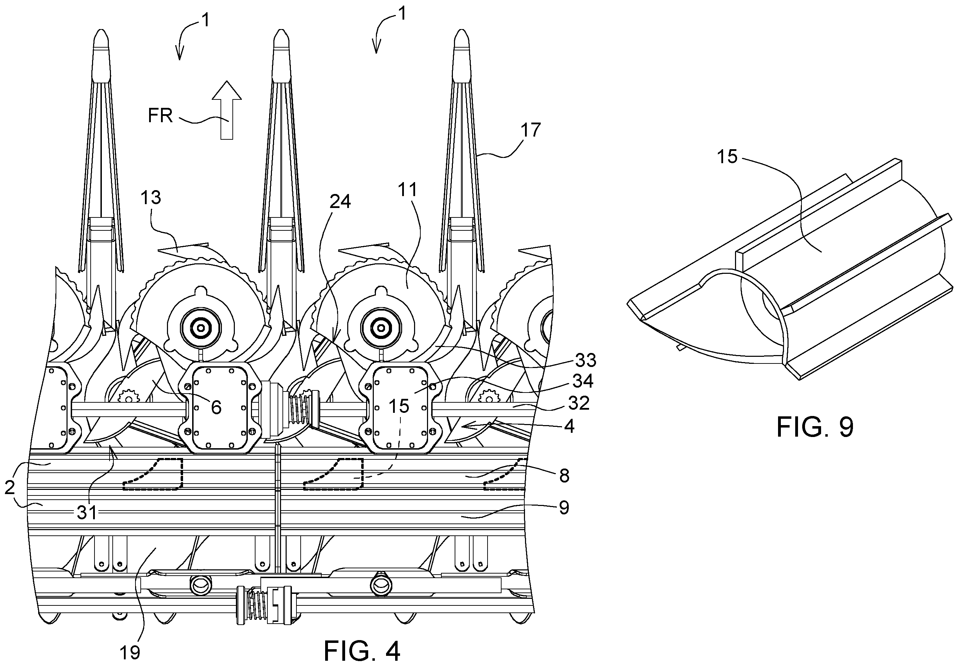

In der abgebildeten Ausführungsform ist der Förderkanal 4 in seinem rückwärtigen Endbereich 31 gekrümmt, d.h. er erstreckt sich bogenförmig in Richtung auf die Mitte des Vorsatzgeräts 3 zu, während er sich ganz am rückwärtigen Ende in der Fahrtrichtung FR erstreckt. Dort ist ein weiterer (dritter) Förderer angeordnet, der hier als Fingerwalze 15 ausgeführt ist, welcher den Endbereich 31 bereichsweise überstreift und den Stängel unmittelbar an die unterhalb des Pflückspaltes 7 angeordneten Pflückwalzen 2 übergibt, ohne den Stängel loszulassen, bevor der Stängel durch die Pflückwalzen 2 eingezogen wird. Die Fingerwalze 15 umfasst einen vorzugsweise in sich flachen, zum freien Ende hin schmaler werdenden und eine parallel zur Drehachse orientierte Außenkante aufweisenden Finger, der exzentrisch zu einer Drehachse angeordnet ist, um welche sich die Fingerwalze 15 dreht (vgl. Figur 9). Diese Drehachse erstreckt sich horizontal und quer zur Vorwärtsrichtung FR. Anders als gezeigt, könnte sich der Förderkanal 4 (auch) in seinem rückwärtigen Endbereich 31 bogenförmig erstrecken und der Finger der Fingerwalze 15 würde sich im bogenförmigen Endbereich 31 befinden.

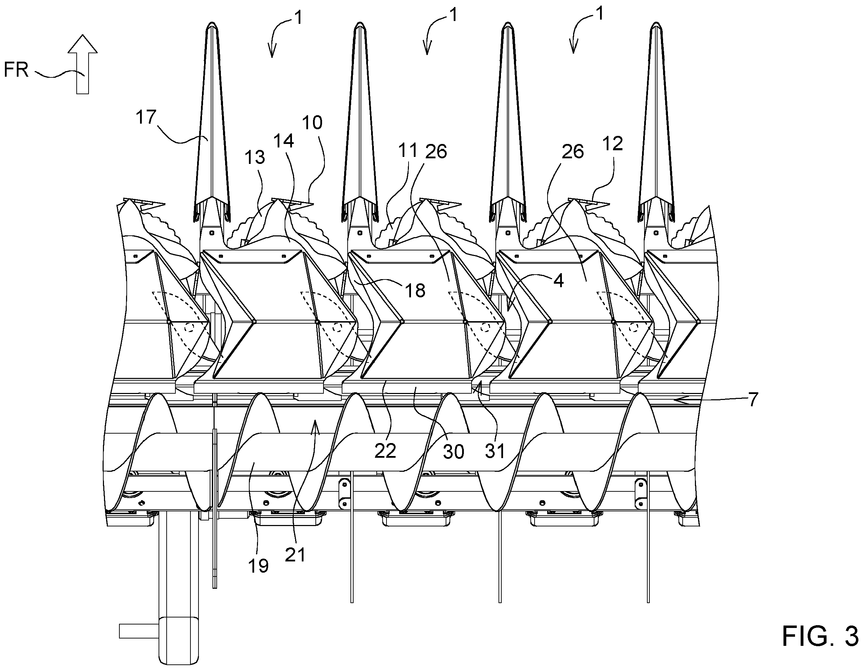

Fig. 3 zeigt denselben Bereich wie Fig. 2, ergänzt mit Abdeckhauben 26, die so angeordnet sind, dass ihre rückwärtigen Flächen zusammen mit der Querförderschneckenwanne 21 des Querförderers 20 eine Mulde bilden, in der die durch die Pflückeinrichtung von den Pflanzenstängel abgetrennten Kolben (und ggf. von den Pflanzen abgefallene Kolben) abtransportiert werden. Die Abdeckhauben 26 sind dachförmig ausgebildet, d.h. umfassen einen nach hinten bis zu einer oberen Kante ansteigenden, vorderen Abschnitt und einen hinter der Kante angeordneten, nach unten abfallenden, rückwärtigen Abschnitt. Zu beiden Seiten hin sind die Abdeckhauben 26 ebenfalls geneigt. Somit bilden jeweils zwei benachbarte Abdeckhauben 26 eine trichterförmige Vertiefung oberhalb des Förderkanals 4, die dessen Bogenform zumindest näherungsweise folgt. Anstelle der in den Figuren gezeigten, geraden seitlichen Flächen der Abdeckhauben 26 könnten diese seitlichen Flächen auch kurvenförmig sein, analog zur Bogenform des Förderkanals 4.

Die Fig. 4 zeigt eine Unteransicht des in den Figuren 2 und 3 gezeigten Bereichs des Vorsatzgeräts 3, der auch die Gegenschneide 11 mit einem am hinteren Rand unterbrochenen Bereich 24 darstellt. Die Gegenschneide 11 bildet somit keinen vollständigen Kreis, sondern ist an ihrer Rückseite unterbrochen, um Material einzusparen. Zugleich ermöglicht die Unteransicht einen besseren Blick auf die Zwischenförderer 6 und die Pflückwalzen 2. Auch um den Zahn 10 gewickeltes Material wird nochmal an der Gegenschneide 11 oder einem damit verbundenen Schneidelement 33 (s. Figur 4) geschnitten, das eine Art Räumfunktion wahrnimmt, um den Zahn von angesammeltem Material zu befreien. Die Gegenschneide kann sich an die untere Einzugsscheibe 13 anpassen, z.B. mittels einer (Teller-) Feder, welche die Gegenschneide 11 nach oben oder die Einzugsscheibe 13 nach unten vorspannt.

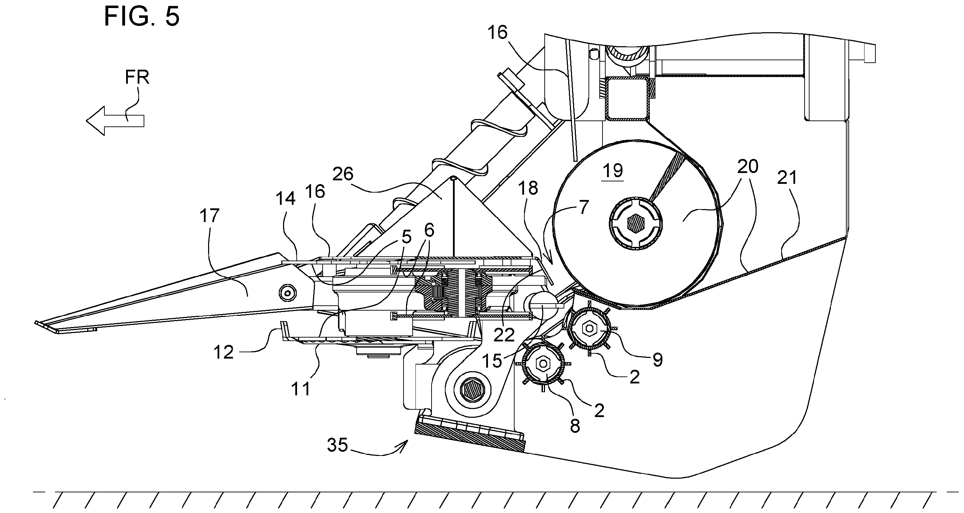

Die Fig 5 zeigt eine schematische Seitenansicht, aus der sich ergibt, dass die Stängel im vorderen Erntebereich 1 mit dem Einzugsförderer 5 eingezogen und zugleich im Zusammenspiel mit der Gegenschneide 11 abgeschnitten werden und anschließend an die sich in gleiche Richtung synchron drehenden Zwischenförderer 6 übergeben werden. Aufgrund der nach außen gerichteten Bogenform des Förderkanals 4 neigen sich die Pflanzen mit ihren Oberseiten, bedingt durch ihre Trägheit, nach innen, zur Mitte des Vorsatzgeräts 3 hin. Dadurch können sie durch die Pflückwalzen 2 leichter angenommen werden und es entsteht ein Fluss der Pflanzen, bei dem sich die Pflanzen nicht kreuzen und somit verhaken können. Die Oberkante der vorderen Pflückwalze 8 ist in dieser vorteilhaften Ausgestaltung so angeordnet, dass sie nahezu unmittelbar unterhalb der Gegenschneide 11 liegt, sodass der untere Bereich des abgeschnittenen Stängels schon aufgrund der Schwerkraft der Pflanze unmittelbar an die vordere Pflückwalze 8 übergeben werden kann, sobald der Stängel den Förderkanal 4 verlässt. Die hintere Pflückwalze 9 ist so angeordnet, dass sie oberhalb der vorderen Pflückwalze 8 liegt, sodass der abgeschnittene Stängel gegen sie gefördert wird, um die Übergabe der abgeschnittene Stängel an die Pflückwalzen 2 weiter zu verbessern. Es liegt aber im Rahmen der Erfindung, dass die Pflückwalzen 2 auf einer horizontalen Ebene angeordnet sind, da sich der Stängel aufgrund der Schwerkraft selbst in den Spalt zwischen den Pflückwalzen 2 hinein bewegt.

Um die Übergabequalität noch weiter zu erhöhen, ist hinter dem Zwischenförderer 6 zusätzlich noch die Fingerwalze 15 angeordnet, die den Stängel vom Zwischenförderer 6 übernimmt, wobei der Finger der Fingerwalze 15 so angeordnet ist, dass er die Pflanze im gekrümmten Endbereich 31 des Förderkanals 4, der in dieser Ansicht nicht sichtbar ist, übernimmt und den Stängel in den Spalt zwischen den Pflückwalzen 2 drückt. Das in dieser vorteilhaften Ausgestaltung nach unten abgekantete Ende des Abdeckblechs 18 bildet zusammen mit dem Anfang der Querfördererschneckenwanne 21 des Querförderers 20 den Pflückspalt 7, wobei dieser durch Verstellbarkeit des Bleches der Querförderschneckenwanne 21 (in Fahrtrichtung FR) in seiner Breite verstellbar ist, sei es von Hand oder gegen die Kraft einer oder mehrerer Feder(n) oder durch einen durch den Bediener der Erntemaschine oder selbsttätig anhand eines sensorisch erfassten Stängeldurchmessers der Pflanzen angesteuerten Aktor. Die abgekantete Fläche 22 des Abdeckblechs 18 bildet dabei zugleich ein Widerlager für den Querförderer 20, d.h. sie unterstützt den Quertransport der Kolben durch die Querförderschnecke 19.

Die nahezu senkrechte, sich relativ weit nach oben erstreckende Rückwand 16 verhindert ein Hinüberfallen der Pflanze nach hinten über die Rückwand 16 hinaus.

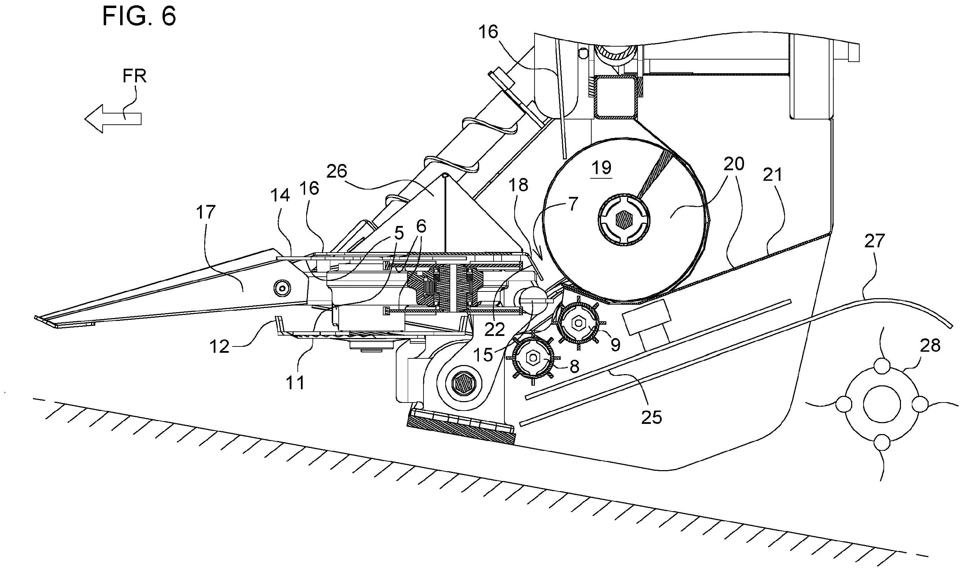

Die Fig. 6 zeigt beim Ausführungsbeispiel eine Seitenansicht wie Figur 5, wobei eine mögliche Position eines Stängelhäckslers 25 mit Trennblech 27 und darunter liegendem Stoppelmulcher 28 abgebildet ist. In der Figur 5 ist hingegen ein Stoppelmulcher 35 unterhalb des Förderzusammenbaus angeordnet. Dieser Stoppelmulcher 35 könnte bei der Ausführungsform nach Figur 6 entfallen, da dort der Stoppelmulcher 28 seine Aufgabe übernimmt.

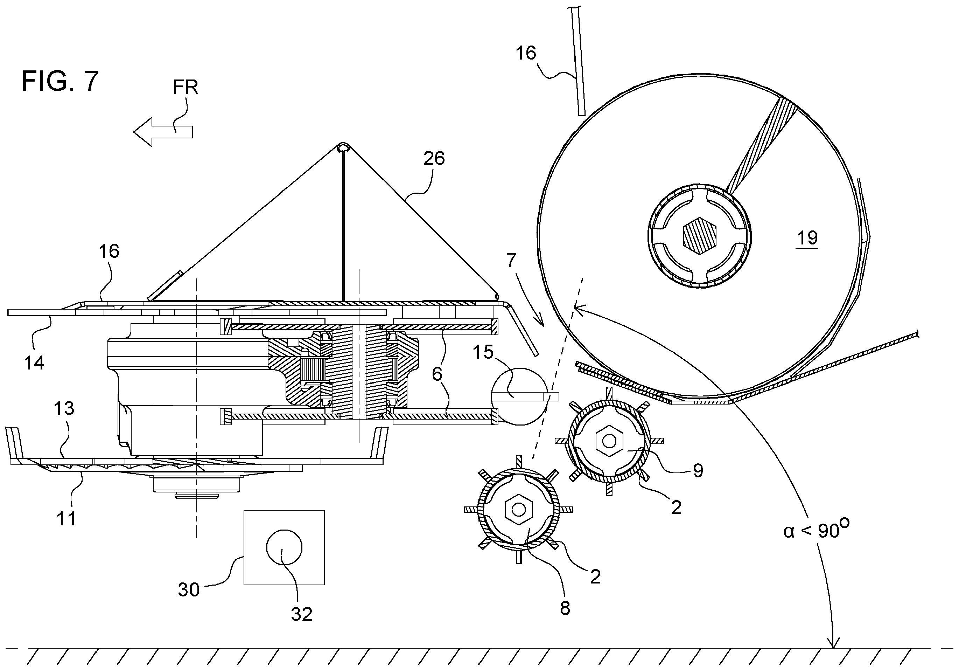

Fig. 7 zeigt beim Ausführungsbeispiel eine Seitenansicht wie Figur 5, wobei hier der nach hinten geneigte Pflückspalt 7 deutlich gemacht wird. Zudem ist noch ein Querträger 30 eingezeichnet, der sich zwischen den Seitenwänden des Vorsatzgeräts 3 erstreckt und der zur Abstützung der Förderzusammenbauten bzw. der zu ihrem Antrieb vorgesehenen Getriebe 34 dient, die auch die Stoppelmulcher 35 antreiben können. Innerhalb des Querträgers 30 ist eine Welle 32 angeordnet, die zum Antrieb der beweglichen Elemente der Förderzusammenbauten über die Getriebe 34 dient. Es wäre auch denkbar, die beweglichen Elemente der Förderzusammenbauten durch elektrische oder hydraulische Motore anzutreiben, deren Versorgungsleitungen durch den Querträger 30 verlegt sein könnten. Bei einer anderen Ausführungsform könnte den Förderzusammenbauten je ein in Vorwärtsrichtung verlaufender Träger zugeordnet sein, der sie an einem quer verlaufenden Träger an der Rückseite des Vorsatzgeräts 3 verbindet und eine Welle und/oder Verbindungsleitungen aufnimmt.

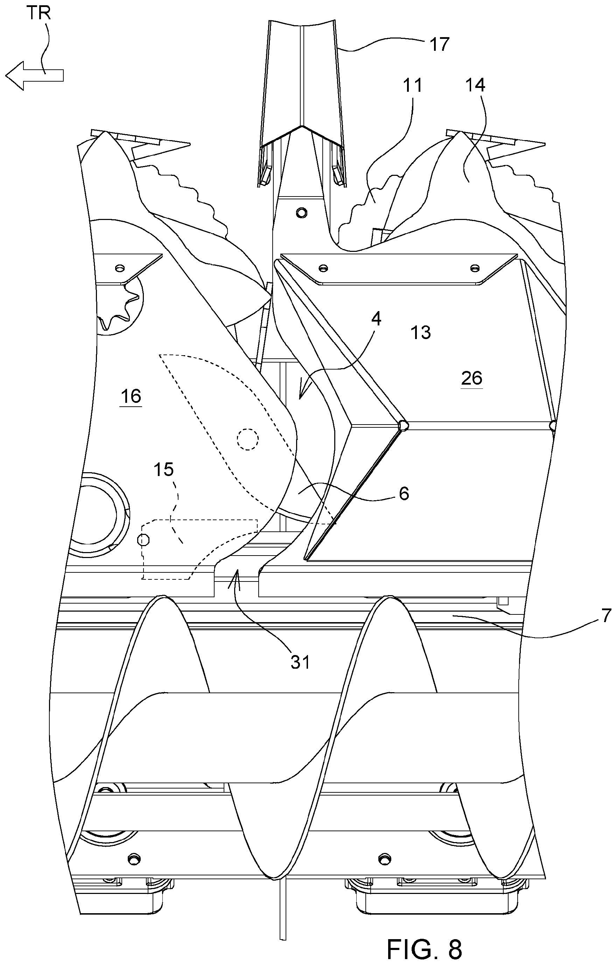

Fig. 8 zeigt eine Draufsicht, wobei hier der gekrümmte Bereich 31 des Förderkanals 4 deutlich gemacht wird, der von der Fingerwalze 15 überstrichen wird, wobei die Transportrichtung TR des Ernteguts gezeigt wird.

Nach alledem ist erkennbar, dass das Vorsatzgerät 3 eine Anzahl seitlich nebeneinander angeordneter, reihenunabhängig arbeitender Förderzusammenbauten umfasst, die jeweils einen Einzugsförderer 5, einen Zwischenförderer 6 und eine Fingerwalze 15 umfassen. Zwischen den Förderzusammenbauten sind Teilerspitzen 17 angeordnet. Der Einzugsförderer 5 dient zum Abschneiden der Pflanzenstängel und zum Fördern des abgeschnittenen Pflanzenstängels in und durch den Förderkanal 4, der jeweils bogenförmig nach außen und anschließend nach innen hin verläuft. Der Zwischenförderer 6 übernimmt den Pflanzenstängel und verbringt ihn zum Endbereich 31, wo er letztlich - unter Unterstützung durch die Fingerwalze 15 - in den Pflückspalt 7 gelangt, unterhalb dem sich die Pflückwalzen 2, d.h. die vordere Pflückwalze 8 und die rückwärtige Pflückwalze 9, befinden, die den Pflanzenstängel nach unten einziehen.

Die Fingerwalze 15 wird, wenn diese in Fahrtrichtung FR am vorderen Umkehrpunkt steht, nach oben hin durch das Abdeckblech 18 verdeckt (anders als in Figur 8 gezeigt, könnte sich der Zwischenförderer 6, wenn der Finger der Fingerwalze 15 in seiner vordersten Position befindet, näherungsweise in Fahrtrichtung FR erstrecken, während der Einzugsförderer 5 gegenüber der in Figur 8 gezeigten Position etwas nach links zu drehen wäre). Der Stängel kann jetzt durch den Zwischenförderer 6 hinter die Fingerwalze 15 gefördert werden. Beim Weiterdrehen der Fingerwalze 15 wird der Stängel durch den Förderkanal 4 zwangsweise weiter nach hinten geschoben. Der Stängel wird zwischen den Pflückwalzen 2 eingeklemmt. Er wird jetzt in keiner Position mehr losgelassen, bis der Stängel durch den Pflückspalt 7 gezogen ist. Die Pflanze wird beim Einziehen zur Mitte des Vorsatzgeräts 3 hin transportiert, obwohl sie sich abhängig von der Stängelneigung, z.B. bei verwehten Beständen, zumindest am Anfang des Einziehvorganges auch nach außen bewegen könnte. Durch die Geschwindigkeiten und Abmessungen der im Eingriff mit dem Erntegut befindlichen Teile des Förderzusammenbaus (Einzugsförderer 5 und Zwischenförderer 6) und der Fingerwalze 15 wird zudem sichergestellt, dass die einzelnen Pflanzen auch einzeln transportiert und an den stromab folgenden Förderer übergeben werden, ohne dass Pflanzen bei der Übergabe von einem Förderer auf den anderen eingeklemmt werden.

Die Umfangsgeschwindigkeiten der im Eingriff mit dem Erntegut befindlichen Teile der Fingerwalze 15 und der Pflückwalzen 2 sind vorzugsweise zumindest näherungsweise gleich (da beispielsweise beim Zwischenförderer 6 die Pflanze anfangs und am Ende weiter außen gefördert wird als bei etwa quer zur Fahrtrichtung FR orientiertem Zwischenförderer 6 ändert sich allerdings dort auch die Fördergeschwindigkeit ein wenig), um den beschriebenen Übergabevorgang möglichst ruckfrei und synchron vorzunehmen. Die Drehgeschwindigkeit der Querförderschnecke 19 kann insbesondere so gewählt werden, dass bei jeder Umdrehung der Fingerwalze 15 genau ein Schneckengang (oder eine ganzzahlige Anzahl an Schneckengängen) an der Fingerwalze 15 vorbeiläuft, wobei der benachbarte Schneckengang nicht vorn ist, wenn eine Pflanze in den Pflückspalt 7 einläuft oder einlaufen kann. Zudem sind auch die Fördergeschwindigkeiten des Förderzusammenbaus so gewählt, dass die Pflanzen mit über die Länge des Förderkanals 4 konstanter Geschwindigkeit gefördert werden und der Zwischenförderer 6 zeitlich und geschwindigkeitsmäßig mit der Fingerwalze 15 abgestimmt ist, wie oben beschrieben. Diese besagten Geschwindigkeiten können fest vorgegeben sein oder von der jeweiligen Vortriebsgeschwindigkeit des Vorsatzgeräts 3 abhängen.

Die Frucht (Kolben) wird am Pflückspalt 7 abgetrennt und durch die Querförderschnecke 19 abtransportiert.

Der Pflückspalt 7 und die Pflückwalzen 2 erstrecken sich, ohne Unterbrechungen durch irgendwelche Abstützungen oder Verstrebungen (abgesehen von eventuellen Abstützungen der Pflückwalzen 2 entlang ihrer Länge am Vorsatzgerät 3, sowie einer optionalen Unterbrechung des Pflückspalts 7 in der Mitte des Vorsatzgeräts 3 beispielsweise über einen sich in Fahrtrichtung erstreckenden Steg oder einen in der Mitte des Vorsatzgeräts 3 bogenförmig nach hinten abbiegenden Pflückspalt), über die gesamte Arbeitsbreite des Vorsatzgeräts 3. Dadurch vermeidet man, dass sich Pflanzenstängel, die bei ungünstigen Erntebedingungen (Lagermais) nicht genau vertikal auf dem Feld stehen, sondern liegen, zwar durch den Förderzusammenbau eingezogen, jedoch nicht optimal durch die Pflückwalzen 2 erfasst und nach unten eingezogen werden, am Ende eines Pflückspalts aufstauen. Durch den quasi endlosen Pflückspalt 7 erreicht man, dass diese Pflanzen dennoch, und sei es an einer weiter zur Mitte des Vorsatzgeräts 3 hin oder an einer weiter nach außen hin liegenden Stelle, letztlich eingezogen werden, ggf. dadurch, dass nachlaufende oder von der anderen Seite des Vorsatzgeräts 3 einlaufende Pflanzen sie mit nach unten führen und sie durch die Pflückwalzen 2 erfasst werden.

## Patentansprüche (Patentansprüche für folgende(n) Vertragsstaat(en): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Vorsatzgerät (3) zum Ernten stängelartiger Pflanzen mit einer Anzahl seitlich nebeneinander angeordneter Förderzusammenbauten zur Abschneiden und Abfördern von Pflanzen und einer stromab der Förderzusammenbauten angeordneten, sich quer zur Fahrtrichtung (FR) erstreckenden Pflückeinrichtung, die einen Pflückspalt (7) und darunter angeordnete Pflückwalzen (2) umfasst, um Fruchtstände von den Pflanzen zu trennen und einer gesonderten Verwertung zuzuführen, **dadurch gekennzeichnet, dass** sich die Pflückeinrichtung über die gesamte Arbeitsbreite zumindest einer Hälfte des Vorsatzgeräts (3) erstreckt.

2. Vorsatzgerät (3) nach Anspruch 1, wobei die Förderzusammenbauten jeweils einen Einzugsförderer (5) umfassen und der um die Hochachse rotierende Einzugsförderer (5) zum Abschneiden der Pflanzen und zum Fördern der abgeschnittenen Pflanzen in einen bogenförmigen Förderkanal (4) konfiguriert ist.

3. Vorsatzgerät (3) nach Anspruch 2, wobei dem Einzugsförderer (5) ein Zwischenförderer (6) nachgeordnet ist, welcher um die Hochachse rotiert und konfiguriert ist, die Pflanzen entlang des Förderkanals (4) zu fördern und an die Pflückeinrichtung zu übergeben.

4. Vorsatzgerät (3) nach Anspruch 3, wobei die Drehachse des Zwischenförderers (6) gegenüber der Drehachse des Einzugsförderers (5) seitlich versetzt ist.

5. Vorsatzgerät (3) nach Anspruch 2, 3 oder 4, wobei der Einzugsförderer (5) eine untere Einzugsscheibe (13) und eine obere Einzugsscheibe (14) aufweist, die untere Einzugsscheibe (13) mit nach außen weisenden, vorlaufend gekrümmten Fingern (10) ausgestattet ist, die die Pflanzen im Zusammenwirken mit einer feststehenden, unterhalb der unteren Einzugsscheibe (13) angeordneten Gegenschneide (11) abschneidet, und die obere, koaxial zur unteren Einzugsscheibe (13) angeordnete Einzugsscheibe (14) mit Zähnen versehen ist, die den Förderkanal (4) überstreichen.

6. Vorsatzgerät (3) nach Anspruch 5, wobei die Finger (10) der unteren Einzugsscheibe (13) am nachlaufenden Rand mit nach oben stehenden Stegen (12) versehen ist.

7. Vorsatzgerät (3) nach einem der Ansprüche 2 bis 6, wobei rückwärtig des Zwischenförderers (6) eine Fingerwalze (15) angeordnet ist, die um eine sich quer zur Fahrtrichtung (FR) erstreckende Drehachse antreibbar ist und mit einem exzentrisch zur Drehachse angeordneten Finger versehen ist, der den Endbereich (31) des Förderkanals (4) zumindest teilweise überstreicht.

8. Vorsatzgerät (3) nach Anspruch 7, wobei die Drehgeschwindigkeiten und Anzahlen der jeweils zum Fördern der Pflanzen dienenden Elemente des Einzugsförderers (5), des Zwischenförderers (6) und der Fingerwalze (15) derart bemessen und synchronisiert sind, dass die Pflanzen über die gesamte Länge des Förderkanals (4) mit konstanter Geschwindigkeit gefördert werden und der Finger der Fingerwalze (15) genau dann mit einer Pflanze zusammenwirkt, wenn diese durch den Zwischenförderer (6) in den dem Pflückspalt (7) benachbarten Endbereich (31) des Förderkanals (4) gelangt und der Finger die Pflanze nach unten zieht, um die Pflanze zwischen die Pflückwalzen (2) einzuführen.

9. Vorsatzgerät (3) nach einem der vorhergehenden Ansprüche, wobei der Pflückspalt (7) zwischen einem rückwärtigen Ende eines oberhalb des Förderzusammenbaus angeordneten, Abdeckbleches (18) und dem Anfang einer Querförderschneckenwanne (21) des Querförderers (20) gebildet wird.

10. Vorsatzgerät (3) nach Anspruch 9, wobei die Querförderschneckenwanne (21) in Fahrtrichtung (FR) positionsverstellbar ist.

11. Vorsatzgerät (3) nach Anspruch 9 oder 10, wobei Windungen der Querförderschnecke (19) oberhalb des Pflückspalt (7) angeordnet sind.

12. Vorsatzgerät (3) nach einem der vorstehenden Ansprüche, wobei eine nach oben stehende Rückwand (16) so ausgestaltet ist, dass sie geklappt werden kann und im eingeklappten Zustand einen Schutz für Teilerspitzen (17) ermöglicht.

13. Vorsatzgerät (3) nach einem der vorstehenden Ansprüche, das oberhalb der Förderzusammenbauten dachförmige Abdeckhauben (26) aufweist, die zusammen mit einer Querförderschneckenwanne (21) eine Mulde bilden und/oder wobei benachbarte Abdeckhauben (26) oberhalb der Förderkanäle (4) trichterförmige Vertiefungen bilden.

14. Vorsatzgerät (3) nach einem der vorstehenden Ansprüche, wobei unterhalb der Pflückwalzen (2) ein Stängelhäcksler (25) und darunter ein Trennblech (27) angeordnet ist, unter welchem ein Stoppelmulcher (28) angeordnet ist.

## Patentansprüche (Patentansprüche für folgende(n) Vertragsstaat(en): DE)

1. Vorsatzgerät (3) zum Ernten stängelartiger Pflanzen mit einer Anzahl seitlich nebeneinander angeordneter Förderzusammenbauten zur Abschneiden und Abfördern von Pflanzen und einer stromab der Förderzusammenbauten angeordneten, sich quer zur Fahrtrichtung (FR) erstreckenden Pflückeinrichtung, die einen Pflückspalt (7) und darunter angeordnete Pflückwalzen (2) umfasst, um Fruchtstände von den Pflanzen zu trennen und einer gesonderten Verwertung zuzuführen, wobei die Förderzusammenbauten jeweils einen Einzugsförderer (5) umfassen und der um die Hochachse rotierende Einzugsförderer (5) zum Abschneiden der Pflanzen und zum Fördern der abgeschnittenen Pflanzen in einen bogenförmigen Förderkanal (4) konfiguriert ist, und dem Einzugsförderer (5) ein Zwischenförderer (6) nachgeordnet ist, welcher um die Hochachse rotiert und konfiguriert ist, die Pflanzen entlang des Förderkanals (4) zu fördern und an die Pflückeinrichtung zu übergeben, **dadurch gekennzeichnet, dass** sich die Pflückeinrichtung über die gesamte Arbeitsbreite zumindest einer Hälfte des Vorsatzgeräts (3) erstreckt, dass rückwärtig des Zwischenförderers (6) eine Fingerwalze (15) angeordnet ist, die um eine sich quer zur Fahrtrichtung (FR) erstreckende Drehachse antreibbar ist und mit einem exzentrisch zur Drehachse angeordneten Finger versehen ist, der den Endbereich (31) des Förderkanals (4) zumindest teilweise überstreicht und dass die Drehgeschwindigkeiten und Anzahlen der jeweils zum Fördern der Pflanzen dienenden Elemente des Einzugsförderers (5), des Zwischenförderers (6) und der Fingerwalze (15) derart bemessen und synchronisiert sind, dass die Pflanzen über die gesamte Länge des Förderkanals (4) mit konstanter Geschwindigkeit gefördert werden und der Finger der Fingerwalze (15) genau dann mit einer Pflanze zusammenwirkt, wenn diese durch den Zwischenförderer (6) in den dem Pflückspalt (7) benachbarten Endbereich (31) des Förderkanals (4) gelangt und der Finger die Pflanze nach unten zieht, um die Pflanze zwischen die Pflückwalzen (2) einzuführen.

2. Vorsatzgerät (3) nach Anspruch 1, wobei die Drehachse des Zwischenförderers (6) gegenüber der Drehachse des Einzugsförderers (5) seitlich versetzt ist.

3. Vorsatzgerät (3) nach Anspruch 1 oder 2, wobei der Einzugsförderer (5) eine untere Einzugsscheibe (13) und eine obere Einzugsscheibe (14) aufweist, die untere Einzugsscheibe (13) mit nach außen weisenden, vorlaufend gekrümmten Fingern (10) ausgestattet ist, die die Pflanzen im Zusammenwirken mit einer feststehenden, unterhalb der unteren Einzugsscheibe (13) angeordneten Gegenschneide (11) abschneidet, und die obere, koaxial zur unteren Einzugsscheibe (13) angeordnete Einzugsscheibe (14) mit Zähnen versehen ist, die den Förderkanal (4) überstreichen.

4. Vorsatzgerät (3) nach Anspruch 3, wobei die Finger (10) der unteren Einzugsscheibe (13) am nachlaufenden Rand mit nach oben stehenden Stegen (12) versehen ist.

5. Vorsatzgerät (3) nach einem der vorhergehenden Ansprüche, wobei der Pflückspalt (7) zwischen einem rückwärtigen Ende eines oberhalb des Förderzusammenbaus angeordneten, Abdeckbleches (18) und dem Anfang einer Querförderschneckenwanne (21) des Querförderers (20) gebildet wird.

6. Vorsatzgerät (3) nach Anspruch 5, wobei die Querförderschneckenwanne (21) in Fahrtrichtung (FR) positionsverstellbar ist.

7. Vorsatzgerät (3) nach Anspruch 5 oder 6, wobei Windungen der Querförderschnecke (19) oberhalb des Pflückspalt (7) angeordnet sind.

8. Vorsatzgerät (3) nach einem der vorstehenden Ansprüche, wobei eine nach oben stehende Rückwand (16) so ausgestaltet ist, dass sie geklappt werden kann und im eingeklappten Zustand einen Schutz für Teilerspitzen (17) ermöglicht.

9. Vorsatzgerät (3) nach einem der vorstehenden Ansprüche, das oberhalb der Förderzusammenbauten dachförmige Abdeckhauben (26) aufweist, die zusammen mit einer Querförderschneckenwanne (21) eine Mulde bilden und/oder wobei benachbarte Abdeckhauben (26) oberhalb der Förderkanäle (4) trichterförmige Vertiefungen bilden.

10. Vorsatzgerät (3) nach einem der vorstehenden Ansprüche, wobei unterhalb der Pflückwalzen (2) ein Stängelhäcksler (25) und darunter ein Trennblech (27) angeordnet ist, unter welchem ein Stoppelmulcher (28) angeordnet ist.

## Claims (Claims for the following Contracting State(s): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Attachment (3) for harvesting stemmed crops with a number of conveying assemblies which are arranged laterally next to one another for cutting off and conveying away crops, and with a picking device which is arranged downstream of the conveying assemblies, extends transversely with respect to the driving direction (FR), and comprises a picking gap (7) and picking rollers (2) which are arranged underneath, in order to sever multiple fruits from the crops and to feed them to a separate processing means, **characterized in that** the picking device extends over the entire working width of at least half of the attachment (3).

2. Attachment (3) according to Claim 1, the conveying assemblies each comprising an intake conveyor (5), and the intake conveyor (5) which rotates about the vertical axis being configured to cut off the crops and to convey the cut-off crops into an arcuate conveying channel (4).

3. Attachment (3) according to Claim 2, an intermediate conveyor (6) being arranged downstream of the intake conveyor (5), which intermediate conveyor (6) rotates about the vertical axis and is configured to convey the crops along the conveying channel (4) and to transfer them to the picking device.

4. Attachment (3) according to Claim 3, the rotational axis of the intermediate conveyor (6) being offset laterally with respect to the rotational axis of the intake conveyor (5).

5. Attachment (3) according to Claim 2, 3 or 4, the intake conveyor (5) having a lower intake disc (13) and an upper intake disc (14), the lower intake disc (13) being equipped with fingers (10) which point outwards and are curved in a leading manner, which lower intake disc (13) cuts off the crops in interaction with a stationary counter-blade (11) which is arranged below the lower intake disc (13), and the upper intake disc (14) which is arranged coaxially with respect to the lower intake disc (13) being provided with teeth which sweep over the conveying channel (4).

6. Attachment (3) according to Claim 5, the fingers (10) of the lower intake disc (13) being provided on the trailing edge with upwardly standing webs (12).

7. Attachment (3) according to one of Claims 2 to 6, a finger roller (15) being arranged rearwards of the intermediate conveyor (6), which finger roller (15) can be driven about a rotational axis, which extends transversely with respect to the driving direction (FR), and is provided with a finger which is arranged eccentrically with respect to the rotational axis and sweeps over the end region (31) of the conveying channel (4) at least partially.

8. Attachment (3) according to Claim 7, the rotational speeds and numbers of the elements, serving in each case to convey the crops, of the intake conveyor (5), the intermediate conveyor (6) and the finger roller (15) being dimensioned and synchronized in such a way that the crops are conveyed at a constant speed over the entire length of the conveying channel (4), and the finger of the finger roller (15) interacting with a crop precisely when the latter passes by way of the intermediate conveyor (6) into that end region (31) of the conveying channel (4) which is adjacent to the picking gap (7), and the finger pulling the crop downwards in order to introduce the crop between the picking rollers (2).

9. Attachment (3) according to one of the preceding claims, the picking gap (7) being formed between a rearward end of a cover plate (18) which is arranged above the conveying assembly and the start of a transverse conveying screw trough (21) of the transverse conveyor (20).

10. Attachment (3) according to Claim 9, it being possible for the position of the transverse conveying screw trough (21) to be adjusted in the driving direction (FR) .

11. Attachment (3) according to Claim 9 or 10, windings of the transverse conveying worm (19) being arranged above the picking gap (7).

12. Attachment (3) according to one of the preceding claims, an upwardly standing rear wall (16) being configured in such a way that it can be folded and, in the folded-in state, makes protection for divider tips (17) possible.

13. Attachment (3) according to one of the preceding claims, which has roof-shaped cover hoods (26) above the conveying assemblies, which cover hoods (26) form a recess together with a transverse conveying worm trough (21), and/or adjacent cover hoods (26) forming funnel-shaped depressions above the conveying channels (4).

14. Attachment (3) according to one of the preceding claims, a stem chopper (25) and, below it, a partition plate (27) being arranged below the picking rollers (2), below which partition plate (27) a stubble mulcher (28) is arranged.

## Claims (Claims for the following Contracting State(s): DE)

1. Attachment (3) for harvesting stemmed crops with a number of conveying assemblies which are arranged laterally next to one another for cutting off and conveying away crops, and with a picking device which is arranged downstream of the conveying assemblies, extends transversely with respect to the driving direction (FR), and comprises a picking gap (7) and picking rollers (2) which are arranged underneath, in order to sever multiple fruits from the crops and to feed them to a separate processing means, the conveying assemblies each comprising an intake conveyor (5), and the intake conveyor (5) which rotates about the vertical axis being configured to cut off the crops and to convey the cut-off crops into an arcuate conveying channel (4), and an intermediate conveyor (6) being arranged downstream of the intake conveyor (5), which intermediate conveyor (6) rotates about the vertical axis and is configured to convey the crops along the conveying channel (4) and to transfer them to the picking device, **characterized in that** the picking device extends over the entire working width of at least half of the attachment (3), **in that** a finger roller (15) is arranged rearwards of the intermediate conveyor (6), which finger roller (15) can be driven about a rotational axis, which extends transversely with respect to the driving direction (FR), and is provided with a finger which is arranged eccentrically with respect to the rotational axis and sweeps over the end region (31) of the conveying channel (4) at least partially, and **in that** the rotational speeds and numbers of the elements, serving in each case to convey the crops, of the intake conveyor (5), the intermediate conveyor (6) and the finger roller (15) being dimensioned and synchronized in such a way that the crops are conveyed at a constant speed over the entire length of the conveying channel (4), and the finger of the finger roller (15) interacts with a crop precisely when the latter passes by way of the intermediate conveyor (6) into that end region (31) of the conveying channel (4) which is adjacent to the picking gap (7), and the finger pulls the crop downwards in order to introduce the crop between the picking rollers (2).

2. Attachment (3) according to Claim 1, the rotational axis of the intermediate conveyor (6) being offset laterally with respect to the rotational axis of the intake conveyor (5).

3. Attachment (3) according to Claim 1 or 2, the intake conveyor (5) having a lower intake disc (13) and an upper intake disc (14), the lower intake disc (13) being equipped with fingers (10) which point outwards and are curved in a leading manner, which lower intake disc (13) cuts off the crops in interaction with a stationary counter-blade (11) which is arranged below the lower intake disc (13), and the upper intake disc (14) which is arranged coaxially with respect to the lower intake disc (13) being provided with teeth which sweep over the conveying channel (4).

4. Attachment (3) according to Claim 3, the fingers (10) of the lower intake disc (13) being provided on the trailing edge with upwardly standing webs (12).

5. Attachment (3) according to one of the preceding claims, the picking gap (7) being formed between a rearward end of a cover plate (18) which is arranged above the conveying assembly and the start of a transverse conveying screw trough (21) of the transverse conveyor (20).

6. Attachment (3) according to Claim 5, it being possible for the position of the transverse conveying screw trough (21) to be adjusted in the driving direction (FR) .

7. Attachment (3) according to Claim 5 or 6, windings of the transverse conveying worm (19) being arranged above the picking gap (7).

8. Attachment (3) according to one of the preceding claims, an upwardly standing rear wall (16) being configured in such a way that it can be folded and, in the folded-in state, makes protection for divider tips (17) possible.

9. Attachment (3) according to one of the preceding claims, which has roof-shaped cover hoods (26) above the conveying assemblies, which cover hoods (26) form a recess together with a transverse conveying worm trough (21), and/or adjacent cover hoods (26) forming funnel-shaped depressions above the conveying channels (4).

10. Attachment (3) according to one of the preceding claims, a stem chopper (25) and, below it, a partition plate (27) being arranged below the picking rollers (2), below which partition plate (27) a stubble mulcher (28) is arranged.

## Revendications (Revendications pour l'(les) Etat(s) contractant(s) suivant(s): AT, BE, CH, DK, ES, FR, GB, GR, IT, LI, LU, NL, SE, MC, PT, IE, SI, LT, LV, FI, RO, MK, CY, AL, TR, BG, CZ, EE, HU, PL, SK, HR, IS, MT, NO, RS, SM)

1. Accessoire (3) pour la récolte de plantes à tiges avec un nombre d'ensembles de transport agencés latéralement les uns à côté des autres pour couper et transporter des plantes et un dispositif de cueillette agencé en aval des ensembles de transport, s'étendant transversalement au sens de la marche (FR), qui comprend une fente de cueillette (7) et des rouleaux de cueillette (2) agencés en dessous, pour séparer des fruits des plantes et les amener à une utilisation séparée, **caractérisé en ce que** le dispositif de cueillette s'étend sur toute la largeur de travail d'au moins une moitié de l'accessoire (3).

2. Accessoire (3) selon la revendication 1, dans lequel les ensembles de transport comprennent chacun un transporteur d'alimentation (5) et le transporteur d'alimentation (5) tournant autour de l'axe vertical est configuré pour couper les plantes et pour transporter les plantes coupées dans un canal de transport en forme d'arc (4) .

3. Accessoire (3) selon la revendication 2, dans lequel le transporteur d'alimentation (5) est suivi d'un transporteur intermédiaire (6) qui tourne autour de l'axe vertical et qui est configuré pour transporter les plantes le long du canal de transport (4) et les transférer au dispositif de cueillette.

4. Accessoire (3) selon la revendication 3, dans lequel l'axe de rotation du transporteur intermédiaire (6) est décalé latéralement par rapport à l'axe de rotation du transporteur d'alimentation (5).

5. Accessoire (3) selon la revendication 2, 3 ou 4, dans lequel le transporteur d'alimentation (5) présente un disque d'alimentation inférieur (13) et un disque d'alimentation supérieur (14), le disque d'alimentation inférieur (13) étant équipé de doigts (10) incurvés vers l'avant, tournés vers l'extérieur, qui coupe les plantes en coopération avec une contre-lame fixe (11) agencée sous le disque d'alimentation inférieur (13), et le disque d'alimentation supérieur (14), agencé coaxialement au disque d'alimentation inférieur (13), étant pourvu de dents qui balayent le canal de transport (4) .

6. Accessoire (3) selon la revendication 5, dans lequel le doigt (10) du disque d'alimentation inférieur (13) est pourvu de nervures (12) s'étendant vers le haut sur le bord arrière.

7. Accessoire (3) selon l'une quelconque des revendications 2 à 6, dans lequel un rouleau à doigt (15) est agencé à l'arrière du transporteur intermédiaire (6), qui peut être entraîné autour d'un axe de rotation s'étendant transversalement au sens de la marche (FR) et qui est pourvu d'un doigt agencé de manière excentrée par rapport à l'axe de rotation, qui balaie au moins partiellement la zone d'extrémité (31) du canal de transport (4).

8. Accessoire (3) selon la revendication 7, dans lequel les vitesses de rotation et les nombres d'éléments du transporteur d'alimentation (5), du transporteur intermédiaire (6) et du rouleau à doigt (15) servant respectivement au transport des plantes sont dimensionnés et synchronisés de telle sorte que les plantes sont transportées à une vitesse constante sur toute la longueur du canal de transport (4) et le doigt du rouleau à doigt (15) coopère avec une plante exactement lorsque celle-ci arrive par le transporteur intermédiaire (6) dans la zone d'extrémité (31) du canal de transport (4) voisine de la fente de cueillette (7) et le doigt tire la plante vers le bas afin d'introduire la plante entre les rouleaux de cueillette (2).

9. Accessoire (3) selon l'une quelconque des revendications précédentes, dans lequel la fente de cueillette (7) est formée entre une extrémité arrière d'une tôle de recouvrement (18) agencée au-dessus de l'ensemble de transport et le début d'un bac à vis de transporteur transversal (21) du transporteur transversal (20).

10. Accessoire (3) selon la revendication 9, dans lequel le bac à vis de transporteur transversal (21) est réglable en position dans le sens de la marche (FR).

11. Accessoire (3) selon la revendication 9 ou 10, dans lequel des spires de la vis de transporteur transversal (19) sont agencées au-dessus de la fente de cueillette (7) .

12. Accessoire (3) selon l'une quelconque des revendications précédentes, dans lequel une paroi arrière (16) s'étendant vers le haut est conçue de manière à pouvoir être rabattue et à fournir une protection pour les pointes de diviseur (17) à l'état rabattu.

13. Accessoire (3) selon l'une quelconque des revendications précédentes, qui présente au-dessus des ensembles de transport des capots (26) en forme de toit qui forment une auge conjointement avec un bac à vis de transporteur transversal (21) et/ou dans lequel des capots (26) voisins forment des creux en forme d'entonnoir au-dessus des canaux de transport (4).

14. Accessoire (3) selon l'une quelconque des revendications précédentes, dans lequel un hacheur de tiges (25) est agencé en dessous des rouleaux de cueillette (2) et une tôle de séparation (27) est agencée en dessous, sous laquelle est agencé un broyeur de chaumes (28).

## Revendications (Revendications pour l'(les) Etat(s) contractant(s) suivant(s): DE)

1. Accessoire (3) pour la récolte de plantes à tiges avec un nombre d'ensembles de transport agencés latéralement les uns à côté des autres pour couper et transporter des plantes et un dispositif de cueillette agencé en aval des ensembles de transport, s'étendant transversalement au sens de la marche (FR), qui comprend une fente de cueillette (7) et des rouleaux de cueillette (2) agencés en dessous, pour séparer les fruits des plantes et les amener à une utilisation séparée, les ensembles de transport comprenant chacun un transporteur d'alimentation (5) et le transporteur d'alimentation (5) tournant autour de l'axe vertical étant configuré pour couper les plantes et pour transporter les plantes coupées dans un canal de transport (4) en forme d'arc, et transporteur d'alimentation (5) étant suivi d'un transporteur intermédiaire (6) qui tourne autour de l'axe vertical et est configuré pour transporter les plantes le long du canal de transport (4) et les transférer au dispositif de cueillette, **caractérisé en ce que** le dispositif de cueillette s'étend sur toute la largeur de travail d'au moins une moitié de l'accessoire (3), **en ce qu'**un rouleau à doigt (15) est agencé à l'arrière du transporteur intermédiaire (6), qui peut être entraîné autour d'un axe de rotation s'étendant transversalement au sens de la marche (FR) et est pourvu d'un doigt agencé de manière excentrée par rapport à l'axe de rotation, qui balaie au moins partiellement la zone d'extrémité (31) du canal de transport (4), et **en ce que** les vitesses de rotation et les nombres des éléments du transporteur d'alimentation (5), du transporteur intermédiaire (6) et du rouleau à doigt (15) servant respectivement au transport des plantes sont dimensionnés et synchronisés de telle sorte que les plantes sont transportées à une vitesse constante sur toute la longueur du canal de transport (4) et le doigt du rouleau à doigt (15) coopère avec une plante exactement lorsque celle-ci arrive par le transporteur intermédiaire (6) dans la zone d'extrémité (31) du canal de transport (4) voisine de la fente de cueillette (7) et le doigt tire la plante vers le bas afin d'introduire la plante entre les rouleaux de cueillette (2).

2. Accessoire (3) selon la revendication 1, dans lequel l'axe de rotation du transporteur intermédiaire (6) est décalé latéralement par rapport à l'axe de rotation du transporteur d'alimentation (5).

3. Accessoire (3) selon la revendication 1 ou 2, dans lequel le transporteur d'alimentation (5) présente un disque d'alimentation inférieur (13) et un disque d'alimentation supérieur (14), le disque d'alimentation inférieur (13) étant équipé de doigts (10) incurvés vers l'avant, tournés vers l'extérieur, qui coupe les plantes en coopération avec une contre-lame fixe (11) agencée sous le disque d'alimentation inférieur (13), et le disque d'alimentation supérieur (14), agencé coaxialement au disque d'alimentation inférieur (13), est pourvu de dents qui balaient le canal de transport (4).

4. Accessoire (3) selon la revendication 3, dans lequel le doigt (10) du disque d'alimentation inférieur (13) est pourvu de nervures (12) s'étendant vers le haut sur le bord arrière.

5. Accessoire (3) selon l'une quelconque des revendications précédentes, dans lequel la fente de cueillette (7) est formée entre une extrémité arrière d'une tôle de recouvrement (18) agencée au-dessus de l'ensemble de transport et le début d'un bac à vis de transporteur transversal (21) du transporteur transversal (20).

6. Accessoire (3) selon la revendication 5, dans lequel le bac à vis de transporteur transversal (21) est réglable en position dans le sens de la marche (FR).

7. Accessoire (3) selon la revendication 5 ou 6, dans lequel des spires de la vis de transporteur transversal (19) sont agencées au-dessus de la fente de cueillette (7) .

8. Accessoire (3) selon l'une quelconque des revendications précédentes, dans lequel une paroi arrière (16) s'étendant vers le haut est conçue de manière à pouvoir être rabattue et à fournir une protection pour les pointes de diviseur (17) à l'état rabattu.

9. Accessoire (3) selon l'une quelconque des revendications précédentes, qui présente au-dessus des ensembles de transport des capots (26) en forme de toit qui forment une auge conjointement avec un bac à vis de transporteur transversal (21) et/ou dans lequel des capots (26) voisins forment des creux en forme d'entonnoir au-dessus des canaux de transport (4).

10. Accessoire (3) selon l'une quelconque des revendications précédentes, dans lequel un hacheur de tiges (25) est agencé en dessous des rouleaux de cueillette (2) et une tôle de séparation (27) est agencée en dessous, sous laquelle est disposé un broyeur de chaumes (28).
